# EUROPEAN PATENT APPLICATION

(11) **EP 4 224 740 A1**
(43) Date of publication of application: **09.08.2023**
(21) Application number: 23151779.8
(22) Date of filing: 16.01.2023
(51) Int. Cl.: H04B 7/185

(54) **AERIAL VEHICLE SURVEILLANCE IN A SHARED COMMUNICATIONS NETWORK**

(30) Priority: 04.02.2022 US 202217665396
(71) Applicant: Honeywell International Inc., Charlotte, NC 28202 (US)
(72) Inventor: KAUFFMAN, Donald C., Charlotte, 28202 (US); TRUE, Willard R., Charlotte, 28202 (US)
(74) Representative: Haseltine Lake Kempner LLP

(57) **Abstract**

In one embodiment, a method is disclosed. The method comprises determining one or more vehicle operation parameters of a vehicle from one or more systems coupled to the vehicle. The one or more vehicle operation parameters include a vertical rate of the vehicle. The method further comprises generating a network slice message for a network slice of a communications network that includes the one or more vehicle operation parameters. The method further comprises transmitting the network slice message via a shared communications protocol to one or more systems external to the vehicle.

## Description

### BACKGROUND

The onset of fifth generation (5G) communication networks has spurred the advance of vehicle communications technology, most notably within the land sector. 5G communication networks enable network slicing, which allows potentially multiple virtualized independent sub-networks within the same physical network architecture. As a result, multiple network protocols can be used to operate over radio frequency channels governed by the communication network.

But in the aerial sector, aerial vehicles also utilize communication network protocols to communicate with other aerial vehicles and ground stations during operation. During all phase of flight from takeoff, to en-route, ending with landing, an aerial vehicle communicates information about the vehicle to other vehicles and ground stations in its vicinity, such as the position, speed, and heading. Aerial vehicles conventionally communicate this information by sending surveillance messages over distinct communication protocols to a ground station. This enables the ground station to verify that the vehicle is following the planned flight path and notifies other vehicles in the vicinity of its presence to avoid dangerous collisions.

Current air traffic utilizes a shared frequency (1090 MHz) for communication. This frequency is shared among air transport, regional, business, and general aviation vehicles, and is saturated in many regions around the world. Adding additional traffic would likely render the shared 1090 MHz frequency unusable for all users in the network, particularly given the rise in air mobility vehicles.

### SUMMARY

In one embodiment, a method is disclosed. The method comprises determining one or more vehicle operation parameters of a vehicle from one or more systems coupled to the vehicle. The one or more vehicle operation parameters include a vertical rate of the vehicle. The method further comprises generating a network slice message for a network slice of a communications network that includes the one or more vehicle operation parameters. The method further comprises transmitting the network slice message via a shared communications protocol to one or more systems external to the vehicle.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
Figure 1 depicts an exemplary communication network used to support network slicing according to embodiments of the present disclosure;
Figure 2 depicts an exemplary system for communicating vehicle information to other vehicles and ground stations using a shared communications protocol according to embodiments of the present disclosure;
Figure 3 depicts an exemplary surveillance network slice message sent by a vehicle to an intended recipient via a shared communications protocol according to embodiments of the present disclosure; and
Figure 4 depicts an exemplary flow diagram illustrating a method for communicating vehicle information according to embodiments of the present disclosure.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

The present disclosure describes improvements for aerial vehicle surveillance in a shared communication network, in which a vehicle can transmit vehicle surveillance information about the vehicle to other recipients utilizing a shared protocol. The communication network can be partitioned into several sub-networks, referred to herein as surveillance network slices, each of which can be implemented in a distinct network architecture. In various embodiments, parameters determined by the vehicle can be inserted in a surveillance network slice message to other recipients utilizing the surveillance network slice protocol. Such parameters can include position information, navigation and heading information, information detailing the identity of the vehicle, and vertical rate information.

Rather than sending communications, navigation, and surveillance messages individually to recipients in the network using separate network protocols and over separate communications equipment (radios, antennas, and the like), all information can be communicated using multiple network slices or the native network protocol of the communications network to recipients. This approach enables other aerial vehicles to treat the message as a broadcast, connectionless message and therefore these vehicles can extract the surveillance data of the transmitting vehicle from the broadcast message. This approach also helps reduce unnecessary air traffic surveillance messages over a shared frequency (e.g., the 1090 MHz frequency). These benefits can be particularly, though not exclusively, beneficial to urban air mobility (UAM) and other lightweight aerial vehicles, since such vehicles have limited capacity to house equipment.

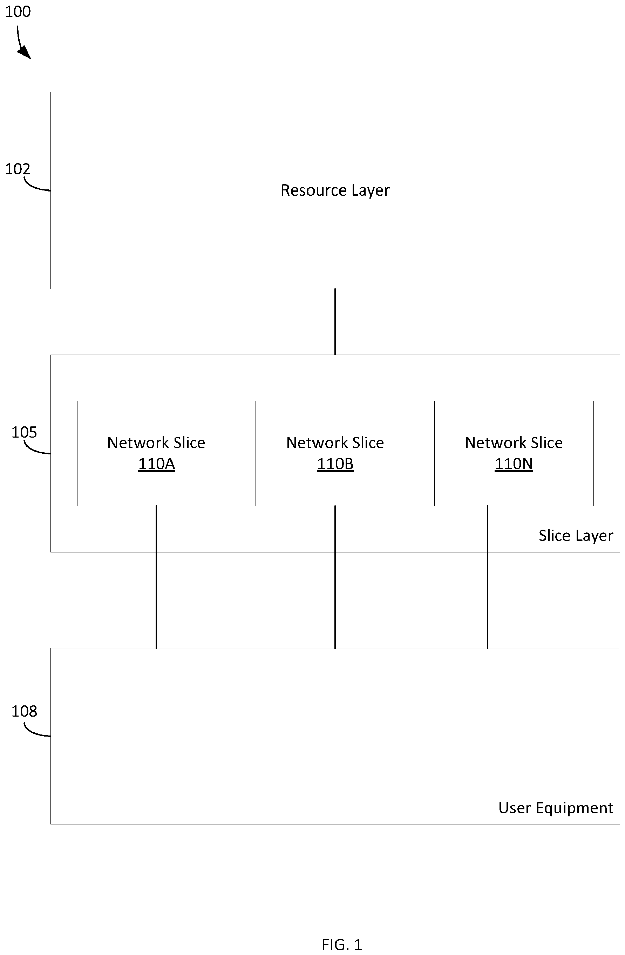

Figure 1 depicts an exemplary communication network 100 used to support network slicing. Network 100 can be a 5G communication network, or can be any other communication network present or future developed that supports network slicing functionality. As shown in Figure 1, network 100 can include various network layers that form the architecture for the communication network. A resource layer 102, for example, is configured to implement a shared communications protocol used to communicate information in the network. Resource layer 102 can include any number of data networks, core networks, radio access networks (RANs), or other resources necessary to implement the shared communications protocol.

A slice layer 105 includes functionality for implementing various network slices 110A-110N. Each network slice includes distinct logical and/or virtualization sub-networks within the shared network architecture of resource layer 102. While network 100 illustrates three different network slices, any number of network slices can be created within slice layer 105. User equipment 108 is connected to network 100 at the slice layer 105, which enables user equipment 108 to access and use the resources associated with each network slice. User equipment 108 can be connected to multiple network slices at a time, and each network slice may be connected to multiple user equipment 108. User equipment 108 can include any systems and/or devices with interfacing circuitry configured to connect to network 100 and for utilizing the network slices. User equipment 108 can include, for example, dedicated and integrated system equipment on an aerial vehicle such as a communications management system and an aerial vehicle command-and-control system (flight control system). Optionally, user equipment 108 can include portable devices on the vehicle, such as an electronic flight bag (EFB), portable computers, tablets, mobile devices, personal digital assistants (PDAs), and the like. Additionally, user equipment 108 can include transceivers located in a ground station communicating with the vehicle.

One or more network slices (for example, network slice 110A) is configured to enable communication between aerial vehicles and ground stations through a shared communications protocol. As part of the network slice architecture, a vehicle can transmit messages to user equipment 108 (such as equipment on other vehicles or ground stations) that include information about one or more parameters of the vehicle. The message can include all relevant information necessary for vehicle surveillance by ground stations, such as information communicated to an air traffic control station when a vehicle is landing or departing from a landing site. Messages can also be sent as a directed message to the intended ground recipients or can be broadcast to all vehicles and ground stations within the proximity of the communicating vehicle.

The communication network 100 can be implemented in other ways that utilize network slicing functionality.

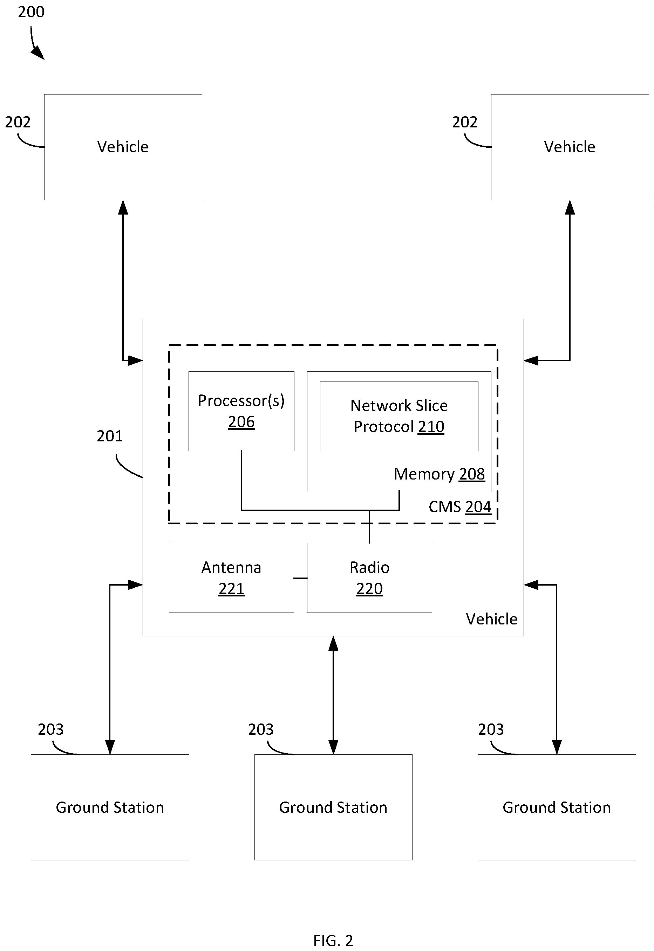

Figure 2 depicts a system 200 for communicating vehicle information to one or more recipients utilizing a network slice architecture as described in Figure 1. System 200 includes a vehicle 201 communicatively coupled to two other vehicles 202 and three ground stations 203. In some embodiments, vehicle 201 is an advanced air mobility (AAM) vehicle, which includes aerial vehicles such as an unmanned air systems (UAS) vehicle and an urban air mobility (UAM) vehicle. It should be understood that vehicle 201 can communicate with more or fewer vehicles and ground stations in system 200.

Vehicle 201 optionally includes a communications management system (CMS) 204 configured to manage communications between other vehicles and ground stations. CMS 204 can include a communications management unit (CMU) or can be implemented as a communications management function (CMF). CMS 204 handles communications from a variety of communications protocols, such as cellular, high frequency (HF), very high frequency (VHF), ultra high frequency (UHF), satellite communications (SATCOM), and the like datalinks. However, CMS 204 is optional because in some embodiments, vehicle 201 communicates with vehicles 202 and ground stations 203 by other modes of communication without using a CMS. In one embodiment, vehicle 201 is configured to communicate messages via radio frequency (RF) signals radiated by at least one antenna 221 to one or more intended recipients in the network. Antenna 221 can receive or transmit RF signals generated by radio 220. Processor 206 is also operative to send signals encoding vehicle operation parameters to radio 220, which enables antenna 221 to communicate vehicle operation parameters to a receiver that corresponds to a ground station 203 or other intended recipients.

Processor 206 can be included as part of CMS 204 or in some embodiments may be implemented as a standalone unit on vehicle 201. Processor 206 may include any one or combination of processors, microprocessors, digital signal processors, application specific integrated circuits, field programmable gate arrays, and/or other similar variants thereof. Processor 206 may also include, or function with, software programs, firmware, or other computer readable instructions stored in a memory 208 for carrying out various process tasks, calculations, and control functions, used in the methods described below. These instructions are typically tangibly embodied on any storage media (or computer readable media) used for storage of computer readable instructions or data structures.

The computer readable medium can be implemented as any available media that can be accessed by a general purpose or special purpose computer or processor, or any programmable logic device, such as processor 206. Suitable processor-readable media may include storage or memory media such as magnetic or optical media. For example, storage or memory media may include conventional hard disks, Compact Disk - Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media may also include transmission media such as electrical, electromagnetic, or digital signals, conveyed via a communication medium such as a network and/or a wireless link.

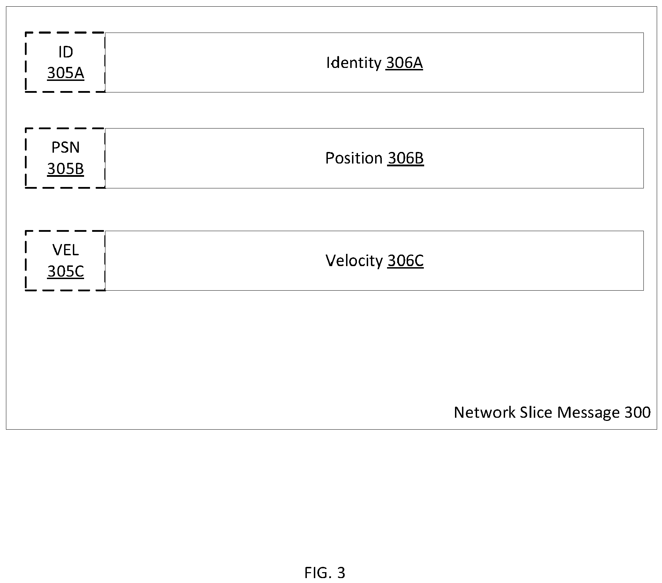

Memory 208 includes surveillance network slice protocol 210 that enables vehicle 201 to communicate to other vehicles 202 and ground stations 203 utilizing the surveillance network slice in the shared communication network. When executed by processor 206, surveillance network slice protocol 210 enables processor 206 to embed information about one or more parameters of vehicle 201 in a surveillance network slice message that can be communicated to external recipients in system 200. The message is sent using a shared communications protocol native to the communication network. In some embodiments, the communication network is a 5G communication network, but any communication network that supports network slicing can be applicable as well. In some embodiments, and as described in Figure 3 below, the information is embedded in a unique message. Memory 208 is also configured to store vehicle operation parameters in a database.

The information stored in the surveillance network slice message conveyed to other recipients can include any number of parameters that describe various aspects of vehicle 201. Such vehicle parameters can include, but not limited to: position information of the vehicle (*e.g.,* spatial coordinates in three-dimensional space), movement information of the vehicle (*e.g.,* speed, acceleration), orientation information of the vehicle (*e.g.,* heading), status information of the vehicle, configuration information of the vehicle, information describing the weight and size of the vehicle, weather state information of the vehicle, collision avoidance coordination information, or information describing the identity of the vehicle (e.g., domain-specific vehicle registration number, regulatory agency issued identifier, identity of the operator, contact information of the operator, call sign). For aerial vehicles, the surveillance network slice message can include other parameters as well, such as information describing vertical parameters of the vehicle in three-dimensional coordinates. In some embodiments, the vertical parameters can include a vertical rate of the vehicle, an altitude or change in altitude of the vehicle, height above terrain, and other parameters. Vertical rate as used herein refers to a rate of change in the vertical position of the vehicle above the terrain.

Vehicle parameters can be determined by systems coupled to vehicle 201. Processor 206 can receive measurements that correspond to one or more vehicle parameters from appropriate sensors, sensor systems, receivers, and/or circuitry on the vehicle. For example, position information can be received by a Global Navigation Satellite System (GNSS) receiver, inertial sensors (*e.g.,* inertial measurement units comprising gyroscopes, accelerometers, or magnetometers), radar altimeters, and the like. Motion parameters such as the speed, heading, and vertical rate of vehicle 201 can be measured by inertial sensors, radar altimeters, or by sensor systems such as an attitude heading reference system (AHRS). Configuration information can be measured using the sensors described above in addition to air data sensors (*e.g.,* lidar sensors) to determine various air data parameters such as angle-of-attack, angle-of-sideslip, and airspeed of vehicle 201. Information relating to the status, identity, weather state, and collision avoidance coordination can be stored and periodically updated in memory 208, which can be accessed by processor 206. For example, collision avoidance coordination information can be retrieved by a terrain avoidance and warning system (TAWS) or detect and avoid (DAA) systems accessible through a database stored by memory 208. For pedagogical explanation, these systems are not explicitly shown in Figure 2 but may form part of the vehicle 201. Processor 206 may also comprise appropriate sensors or circuitry configured to determine the vehicle operation parameters.

Figure 3 illustrates a possible surveillance network slice message 300, which displays a message with three vehicle parameters for a vehicle surveillance network slice. Information corresponding to each parameter can be embedded in three distinct slice message data types. In the example shown in Figure 3, the first slice message element 306A includes information on the identity of the vehicle, including information on any one of or combination of vehicle registration number, regulatory agency issued identifier, information of an operator of the vehicle, and call sign. Second slice message element 306B includes information on the position of the vehicle, including information on spatial coordinates (latitude, longitude, altitude). Third slice message element 306C includes information on the velocity (horizontal, vertical). Optionally, each slice message element includes a corresponding indicator that identifies the vehicle parameter type (ID 305A for the ID information, PSN 305B for the position information, and VEL 305C for the velocity information). More or fewer slice message elements can be included in the surveillance network slice message 300. Additionally, vehicle parameters can be communicated with other protocols and in other formats depending on the standards of the communication network and/or the network slice.

Other examples of vehicle parameters include airborne position (altitude, latitude, longitude, and/or radius of containment), surface position (latitude, longitude), maximum take-off weight, aircraft wingspan, type of vehicle, airborne velocity (east-west, north-south), vehicle status (normal, priority, emergency), vehicle operation (manned, unmanned), weather state (icing) status, environmental (temperature, wind speed, direction, turbulence, and/or other hazard conditions), traffic threat messages (traffic threat resolution advisory or traffic threat identity), and contingency planning (return, hold, continue, divert, or ditch to a specified location).

In some embodiments, data on acquired navigation parameters are embodied in the network slice message 300 as a range of values. For example, velocity parameter 306C can include a range of horizontal velocity and/or vertical velocity measurements from velocities captured by sensors on the vehicle. Position parameter 306C optionally includes position information captured as numerical degrees with indicators on the direction (north, south, etc.).

In one embodiment, the embedded navigation parameter information is sent in a repetitive, sequential surveillance network slice message from the vehicle to the intended recipients. In other communication networks, the surveillance network slice message types available to communicate surveillance data may be sized differently. Therefore, the altitude, latitude, and longitude information are optionally communicated in fewer or more data types and may be packed or sequenced into the data types differently than the illustrative examples shown in Figures 3.

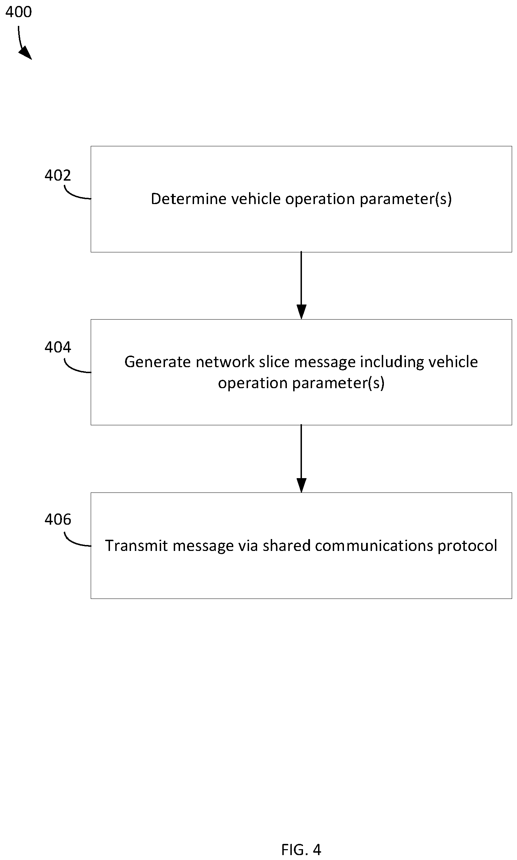

Figure 4 depicts an exemplary flow diagram illustrating a method 400 for communicating vehicle information. Method 400 may be implemented via the techniques described with respect to Figures 1-3, but may be implemented via other techniques as well. The blocks of the flow diagram have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner).

Starting at block 402, method 400 determines one or more vehicle operation parameters. In some embodiments, the vehicle operation parameters include information such as a position of the vehicle, a speed of the vehicle, a heading of the vehicle, a status of the vehicle, a configuration of the vehicle, a weight of the vehicle, a size of the vehicle, a weather state of the vehicle, a collision avoidance coordination for the vehicle, or an identity of the vehicle. The vehicle parameters can also include information describing vertical information of the vehicle, such as a vertical rate of the vehicle, a vertical change in position of the vehicle, a rate of ascent, or a rate of descent. However, this list is non-limiting and could also include other information related to the vehicle.

Proceeding next to block 404, method 400 generates a surveillance network slice message that includes the vehicle operation parameters.

Method 400 proceeds to block 406 and transmits a message including the surveillance network slice message via a shared communications protocol to one or more intended recipients, such as another vehicle or a ground station. In some embodiments, the shared communications protocol is a protocol used by a cellular communications network. A 5G communication network comprises but one example of such a network. The message can be transmitted as part of a network broadcast to each user in the network utilizing the surveillance network slice, or can be directed to a particular entity like a ground station as part of a standard surveillance request by the ground station. Because the surveillance network slice enables parameters to be embedded in the message of the surveillance network slice protocol, other entities receiving the message can extract vehicle surveillance information in a single broadcast message using a single communications link, thus reducing the traffic bandwidth utilized in the communication network and the processing required to extract and process the surveillance information. In some embodiments, other network slices or the native network protocol of the communications network can be used to communicate other types of information to and from the vehicle such as command and control communications, payload communications, and navigation information.

The methods and techniques described herein may be implemented in digital electronic circuitry, or with a programmable processor (for example, a special-purpose processor or a general-purpose processor such as a computer) firmware, software, or in various combinations of each. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instruction to, a data storage system, at least one input device, and at least one output device. Generally, a processor will receive instructions and data from a read-only memory and/or a random-access memory. Storage devices suitable for tangibly embodying computer program instructions and data include all forms of non-volatile memory, including by way of example semiconductor memory devices, such as erasable programmable read-only memory (EPROM), electrically erasable programmable read-only memory (EEPROM), and flash memory devices; magnetic disks such as internal hard disks and removable disks; magneto-optical disks; and digital video disks (DVDs). Any of the foregoing may be supplemented by, or incorporated in, specially-designed application-specific integrated circuits (ASICs).

### EXAMPLE EMBODIMENTS

Example 1 includes a method, comprising: determining one or more vehicle operation parameters of a vehicle from one or more systems coupled to the vehicle, wherein the one or more vehicle operation parameters include a vertical rate of the vehicle; generating a network slice message for a network slice of a communications network that includes the one or more vehicle operation parameters; and transmitting the network slice message via a shared communications protocol to one or more systems external to the vehicle.

Example 2 includes the method of Example 1, wherein generating a network slice message that includes the one or more vehicle operation parameters comprises generating the network slice message including at least one of: a position of the vehicle, a horizontal speed of the vehicle, a heading of the vehicle, a status of the vehicle, a configuration of the vehicle, a weight of the vehicle, a size of the vehicle, a weather state of the vehicle, a collision avoidance coordination for the vehicle, or an identity of the vehicle.

Example 3 includes the method of any of Examples 1-2, wherein generating a network slice message that includes the one or more vehicle operation parameters comprises generating the network slice message that includes at least one of: a rate of ascent or a rate of descent.

Example 4 includes the method of any of Examples 1-3, wherein generating a network slice message for a network slice of a communications network comprises generating the network slice message of a 5G communications network.

Example 5 includes the method of any of Examples 1-4, wherein transmitting a network slice message via a shared communications protocol comprises transmitting the network slice message including each of the one or more vehicle operation parameters using a single communications protocol.

Example 6 includes the method of any of Examples 1-5, wherein transmitting a network slice message via a shared communications protocol comprises broadcasting the network slice message to one or more intended recipients using the shared communications protocol, wherein the one or more intended recipients include at least one of: a vehicle or a ground station.

Example 7 includes the method of any of Examples 1-6, wherein the one or more vehicle operation parameters include at least one of: vehicle registration number, regulatory agency issued identifier, information of an operator of the vehicle, and call sign.

Example 8 includes a program product comprising non-transitory computer readable instructions, wherein when executed by at least one processor, the non-transitory computer readable instructions cause the at least one processor to: receive one or more vehicle operation parameters of a vehicle from one or more systems coupled to the vehicle, wherein the one or more vehicle operation parameters include a vertical rate of the vehicle; generate a network slice message for a network slice of a communications network that includes the one or more vehicle operation parameters; and cause the network slice message to be transmitted via a shared communications protocol to one or more systems external to the vehicle.

Example 9 includes the program product of Example 8, wherein the one or more vehicle operation parameters includes at least one of: a position of the vehicle, a horizontal speed of the vehicle, a heading of the vehicle, a status of the vehicle, a configuration of the vehicle, a weight of the vehicle, a size of the vehicle, a weather state of the vehicle, a collision avoidance coordination for the vehicle, or an identity of the vehicle.

Example 10 includes the program product of any of Examples 8-9, wherein the vertical rate of the vehicle includes at least one of: a rate of ascent, or a rate of descent.

Example 11 includes the program product of any of Examples 8-10, wherein the communications network is a 5G communications network.

Example 12 includes the program product of any of Examples 8-11, wherein to cause the network slice message to be transmitted via a shared communications protocol comprises transmitting the network slice message including each of the one or more vehicle operation parameters using a single communications protocol.

Example 13 includes the program product of any of Examples 8-12, wherein to cause the network slice message to be transmitted via a shared communications protocol comprises broadcasting the network slice message to one or more intended recipients using the shared communications protocol, wherein the one or more intended recipients include at least one of: a vehicle or a ground station.

Example 14 includes the program product of any of Examples 8-13, wherein the one or more vehicle operation parameters include at least one of: vehicle registration number, regulatory agency issued identifier, information of an operator of the vehicle, and call sign.

Example 15 includes a system, comprising: a radio coupled to a vehicle, wherein the radio is configured to generate radio frequency (RF) signals; at least one antenna coupled to the radio, wherein the at least one antenna is configured to radiate the RF signals external to the vehicle; and at least one processor coupled to the radio, wherein the at least one processor is configured to: receive one or more vehicle operation parameters of the vehicle from one or more systems coupled to the vehicle, wherein the one or more vehicle operation parameters include a vertical rate of the vehicle; generate a network slice message for a network slice of a communications network that includes the one or more vehicle operation parameters; and cause the network slice message to be transmitted via a shared communications protocol to one or more systems external to the vehicle.

Example 16 includes the system of Example 15, wherein the vehicle is an aerial vehicle.

Example 17 includes the system of any of Examples 15-16, wherein to cause the network slice message to be transmitted via a shared communications protocol comprises broadcasting the network slice message to one or more intended recipients using the shared communications protocol, wherein the one or more intended recipients include at least one of: a vehicle or a ground station.

Example 18 includes the system of any of Examples 15-17, wherein the vertical rate of the vehicle includes at least one of: a rate of ascent, or a rate of descent.

Example 19 includes the system of any of Examples 15-18, wherein the one or more vehicle operation parameters includes at least one of: a position of the vehicle, a horizontal speed of the vehicle, a heading of the vehicle, a status of the vehicle, a configuration of the vehicle, a weight of the vehicle, a size of the vehicle, a weather state of the vehicle, a collision avoidance coordination for the vehicle, or an identity of the vehicle.

Example 20 includes the system of any of Examples 15-19, wherein to cause the network slice message to be transmitted via a shared communications protocol comprises transmitting the network slice message including each of the one or more vehicle operation parameters using a single communications protocol.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A method, comprising:
determining one or more vehicle operation parameters of a vehicle from one or more systems coupled to the vehicle, wherein the one or more vehicle operation parameters include a vertical rate of the vehicle;
generating a network slice message for a network slice of a communications network that includes the one or more vehicle operation parameters; and
transmitting the network slice message via a shared communications protocol to one or more systems external to the vehicle.

2. The method of claim 1, wherein generating a network slice message that includes the one or more vehicle operation parameters comprises generating the network slice message including at least one of: a position of the vehicle, a horizontal speed of the vehicle, a heading of the vehicle, a status of the vehicle, a configuration of the vehicle, a weight of the vehicle, a size of the vehicle, a weather state of the vehicle, a collision avoidance coordination for the vehicle, or an identity of the vehicle.

3. The method of claim 1, wherein generating a network slice message that includes the one or more vehicle operation parameters comprises generating the network slice message that includes at least one of: a rate of ascent or a rate of descent.

4. The method of claim 1, wherein generating a network slice message for a network slice of a communications network comprises generating the network slice message of a 5G communications network.

5. The method of claim 1, wherein transmitting a network slice message via a shared communications protocol comprises broadcasting the network slice message to one or more intended recipients using the shared communications protocol, wherein the one or more intended recipients include at least one of: a vehicle or a ground station.

6. The method of claim 1, wherein the one or more vehicle operation parameters include at least one of: vehicle registration number, regulatory agency issued identifier, information of an operator of the vehicle, and call sign.

7. A program product comprising non-transitory computer readable instructions, wherein when executed by at least one processor, the non-transitory computer readable instructions cause the at least one processor to perform the method of claim 1.

8. A system, comprising:
a radio coupled to a vehicle, wherein the radio is configured to generate radio frequency (RF) signals;
at least one antenna coupled to the radio, wherein the at least one antenna is configured to radiate the RF signals external to the vehicle; and
at least one processor coupled to the at least one antenna, wherein the at least one processor is configured to:
receive one or more vehicle operation parameters of the vehicle from one or more systems coupled to the vehicle, wherein the one or more vehicle operation parameters include a vertical rate of the vehicle;
generate a network slice message for a network slice of a communications network that includes the one or more vehicle operation parameters; and
cause the network slice message to be transmitted via a shared communications protocol to one or more systems external to the vehicle.

9. The system of claim 8, wherein the vertical rate of the vehicle includes at least one of: a rate of ascent, or a rate of descent.

10. The system of claim 8, wherein the one or more vehicle operation parameters includes at least one of: a position of the vehicle, a horizontal speed of the vehicle, a heading of the vehicle, a status of the vehicle, a configuration of the vehicle, a weight of the vehicle, a size of the vehicle, a weather state of the vehicle, a collision avoidance coordination for the vehicle, or an identity of the vehicle.
